(19) Europäisches Patentamt
European Patent Office
Office européen des brevets

(11) **EP 3 910 564 A1**

(12) **EUROPEAN PATENT APPLICATION**

(43) Date of publication:
**17.11.2021 Bulletin 2021/46**

(51) Int Cl.:
**G06N 20/10** *(2019.01)*

(21) Application number: **21164861.3**

(22) Date of filing: **25.03.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.05.2020 JP 2020085979**

(71) Applicant: **FUJITSU LIMITED
Kanagawa 211-8588 (JP)**

(72) Inventors:
• **Amemiya, Satoshi
Kanagawa, 211-8588 (JP)**
• **Ito, Toshio
Kanagawa, 211-8588 (JP)**

(74) Representative: **Hoffmann Eitle
Patent- und Rechtsanwälte PartmbB
Arabellastraße 30
81925 München (DE)**

(54) **IMPACT CALCULATION PROGRAM, IMPACT CALCULATION DEVICE, AND IMPACT CALCULATION METHOD**

(57) An impact calculation program executed by the computer, the impact calculation program includes calculating a plurality of gradient values, each of the plurality of gradient values is a gradient value corresponding to each of a plurality of sampling points of a nonlinear regression model, and calculating, as an impact, a root-mean-square of which a first gradient value included in the plurality of the gradient values at a first sampling point included in the plurality of sampling point and a second gradient value at a one or more sampling point within a predetermined range around the first sampling point.

FIG. 1

**Description**

[Field]

The embodiment discussed herein is related to an impact calculation program, an impact calculation device, and an impact calculation method.

[Background Art]

There has been a method for processing analysis data by applying an analysis method using statistical machine learning to multidimensional analysis data that is collected from each of a plurality of samples by an analysis device and is formed with output values of a plurality of channels of a multichannel detector included in the analysis device. A nonlinear regression function or discriminant function that represents analysis data obtained with respect to a known sample is calculated, and the contribution of each of the output values of the plurality of channels forming the analysis data of the known sample to the nonlinear regression function or the nonlinear discriminant function is calculated from the derivative value of the calculated nonlinear regression function or discriminant function. In accordance with the contributions, the channel to be used for processing analysis data obtained with respect to an unknown sample is then determined from among the plurality of channels of the detector (see Patent Document 1, for example).

[Citation List]

[Patent Literature]

[PTL1] International Publication Pamphlet No. WO 2018/025361.

[Summary of Invention]

[Technical Problem]

However, by the conventional method for processing analysis data, the contribution (synonymous with impact or sensitivity) of each channel is calculated from the derivative value of an entire nonlinear regression function or discriminant function. Therefore, an appropriate impact might not be calculated in a case where there is a great fluctuation, such as a case where the frequency of the function is high, or where the influence of noise is large, for example.
Therefore, an object of the embodiment discussed herein is to provide an impact calculation program, an impact calculation device, and an impact calculation method capable of appropriately calculating an impact.

[Solution to Problem]

According to an aspect of the embodiments, an impact calculation program executed by the computer. The impact calculation program includes calculating a plurality of gradient values, each of the plurality of gradient values is a gradient value corresponding to each of a plurality of sampling points of a nonlinear regression model, calculating, as an impact, a root-mean-square of which a first gradient value included in the plurality of the gradient values at a first sampling point included in the plurality of sampling point and a second gradient value at a one or more sampling point within a predetermined range around the first sampling point.

[Effect]

It is possible to provide an impact calculation program, an impact calculation device, and an impact calculation method capable of appropriately calculating an impact.

[Brief Description of Drawings]

FIG. 1 is a diagram illustrating a computer system 20;
FIG. 2 is a block diagram for explaining the configuration of the principal components in a main body 21 of the computer system 20;
FIG. 3 is a diagram illustrating an analysis server 100 into which an impact calculation program is installed;

FIG. 4A is graph illustrating a method for acquiring the gradients of sampling points within a predetermined peripheral range;

FIG. 4B is graph illustrating a method for acquiring the gradients of sampling points within a predetermined peripheral range;

FIG. 5A is graph illustrating an example of distributions of data x1 and data x2;

FIG. 5B is graph illustrating an example of distributions of data x1 and data x2;

FIG. 6A is graph illustrating the impacts calculated with respect to the data x1 and the data x2;

FIG. 6B is graph illustrating the impacts calculated with respect to the data x1 and the data x2;

FIG. 7 is a graph illustrating an example of the distribution of the data x1;

FIG. 8A is graph illustrating the impacts calculated with respect to the data x1 and the data x2;

FIG. 8B is graph illustrating the impacts calculated with respect to the data x1 and the data x2;

FIG. 9 is a graph illustrating an example of the distribution of the data x1;

FIG. 10A is graph illustrating the impacts calculated with respect to the data x1 and the data x2;

FIG. 10B is graph illustrating the impacts calculated with respect to the data x1 and the data x2;

FIG. 11 is a graph illustrating an example of the distribution of the data x1;

FIG. 12A is graph illustrating the impacts calculated with respect to the data x1 and the data x2;

FIG. 12B is graph illustrating the impacts calculated with respect to the data x1 and the data x2; and

FIG. 13 is a flowchart illustrating a process to be executed by the analysis server 100.

[Description of Embodiments]

The following is a description of an impact calculation program, an impact calculation device, and an impact calculation method according to an embodiment.

<Embodiment>

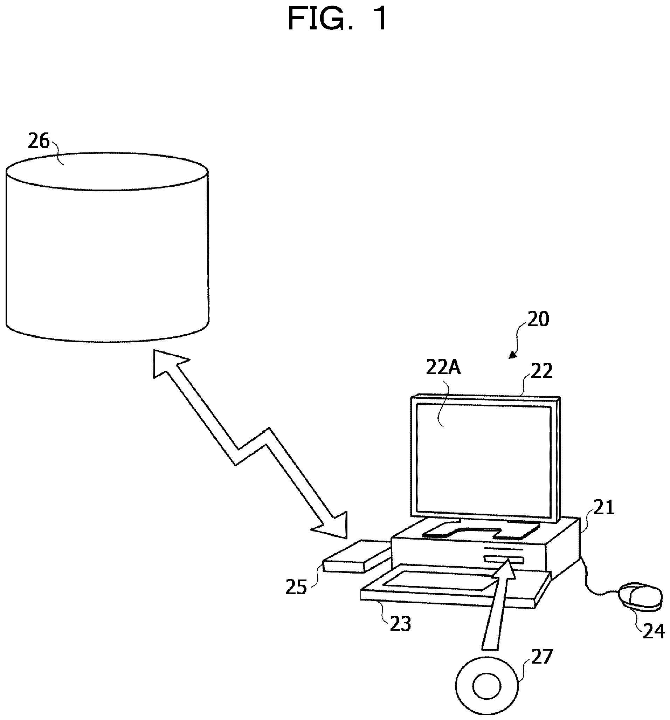

FIG. 1 is a diagram illustrating a computer system 20. The computer system 20 includes a main body 21, a display 22, a keyboard 23, a mouse 24, and a modem 25, and is used as a server into which the impact calculation program of the embodiment is installed.

The main body 21 includes a central processing unit (CPU), a hard disk drive (HDD), a disk drive, and the like. The display 22 displays a processing result and the like on a screen 22A in accordance with an instruction from the main body 21. For example, a liquid crystal monitor is preferably used as the display 22. The keyboard 23 is an input unit for inputting various kinds of information to the computer system 20. The mouse 24 is an input unit for specifying a desired position on the screen 22A of the display 22. The modem 25 accesses an external database or the like to download a program or the like stored in another computer system.

The impact calculation program of the embodiment is stored in a portable recording medium such as a disk 27. Alternatively, the impact calculation program is downloaded from a recording medium 26 of another computer system by use of a communication device such as the modem 25, and is input to the computer system 20 for compilation. Further, the portable recording medium may be an integrated circuit (IC) card memory, a magnetic disk such as a floppy (registered trademark) disk, a magneto-optical disk, a compact disk-read only memory (CD-ROM), a universal serial bus (USB) memory, or the like. Alternatively, instead of the portable recording medium, it is possible to use a recording medium that can be accessed by a computer system connected via a communication device such as the modem 25 or a local area network (LAN).

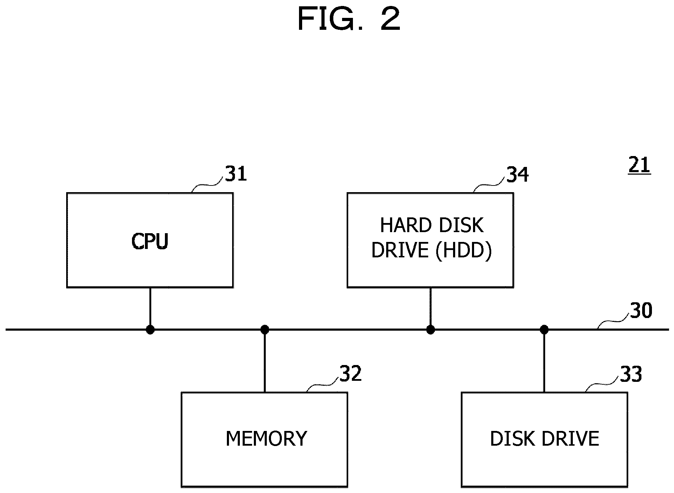

FIG. 2 is a block diagram for explaining the configuration of the principal components in the main body 21 of the computer system 20. The main body 21 includes a CPU 31, a memory 32 including a random access memory (RAM), a ROM, or the like, a disk drive 33 for the disk 27, and a hard disk drive (HDD) 34, which are coupled by a bus 30. Note that the computer system 20 is not limited to a computer system with the configuration illustrated in FIGs. 1 and 2, and various known components may be added or may be used as alternatives.

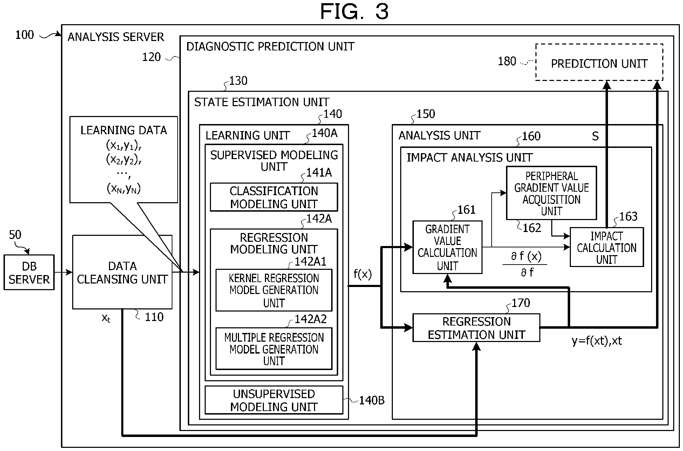

FIG. 3 is a diagram illustrating an analysis server 100 into which the impact calculation program is installed. The analysis server 100 is an example of the impact calculation device. When the analysis server 100 executes the impact calculation program, the impact calculation method is realized.

FIG. 3 illustrates a database (DB) server 50 in addition to the analysis server 100. Both the analysis server 100 and the DB server 50 are formed by the computer system 20 illustrated in FIGs. 1 and 2. The DB server 50 has a database that stores data such as measured values of various events. The measured values and the like of various events may be of any kind. For example, the measured values may be measured values of various sensors of an electric vehicle (EV) or a ship, measured values for detecting a specific abnormality, or the like. The DB server 50 transmits data such as measured values requested by the analysis server 100, to the analysis server 100.

The analysis server 100 includes a data cleansing unit 110 and a diagnostic prediction unit 120. The diagnostic prediction unit 120 includes a number of processing units (130 to 180) as illustrated in FIG. 3. The data cleansing unit 110, the diagnostic prediction unit 120, and the processing units (130 to 180) in the diagnostic prediction unit 120 are illustrated as the functional blocks of the functions of the program to be executed by the analysis server 100. The data cleansing unit 110, the diagnostic prediction unit 120, and the processing units (130 to 180) in the diagnostic prediction unit 120 include a memory for storing data and the like. The memory is formed with at least one of the following: the memory 32, the disk drive 33 for the disk 27, and the hard disk drive 34 illustrated in FIG. 2.

For example, the data cleansing unit 110 cleanses (preprocesses) the data transmitted from the DB server 50. The data cleansing unit 110 performs processing such as removal of noise, errors, and the like, unification of size, dimension, and the like, and outputs the data to the diagnostic prediction unit 120.

The diagnostic prediction unit 120 diagnoses and predicts data for learning to be input from the data cleansing unit 110 (this data will be hereinafter referred to as learning data). The pieces of learning data are $(x_1, y_1)$, $(x_2, y_2)$,..., and $(x_N, y_N)$. The diagnostic prediction unit 120 includes a state estimation unit 130 and a prediction unit 180. The state estimation unit 130 includes a learning unit 140 and an analysis unit 150.

The learning unit 140 includes a supervised modeling unit 140A and an unsupervised modeling unit 140B. Learning data is input to the learning unit 140 from the data cleansing unit 110. The supervised modeling unit 140A includes a classification modeling unit 141A and a regression modeling unit 142A. The classification modeling unit 141A generates a classification model from the learning data by supervised learning.

The regression modeling unit 142A is a processing unit that generates a nonlinear regression model from the learning data by supervised learning, and includes a kernel regression model generation unit 142A1 and a multiple regression model generation unit 142A2. The kernel regression model generation unit 142A1 generates a K-nearest neighbor crossover kernel regression model from the learning data by supervised learning. The multiple regression model generation unit 142A2 generates a multiple regression model from the learning data by supervised learning. The unsupervised modeling unit 140B generates a predetermined regression model, classification model, or the like from the learning data by unsupervised learning.

The learning unit 140 transmits data representing a model f(x) generated by the classification modeling unit 141A, the kernel regression model generation unit 142A1, the multiple regression model generation unit 142A2, or the unsupervised modeling unit 140B, to the analysis unit 150.

The analysis unit 150 includes an impact analysis unit 160 and a regression estimation unit 170. The data representing the model f(x) is transmitted from the learning unit 140 to the analysis unit 150. The impact analysis unit 160 includes a gradient value calculation unit 161, a peripheral gradient value acquisition unit 162, and an impact calculation unit 163.

The gradient value calculation unit 161 calculates the gradient value $\partial f(x)/\partial x$ of each of the plurality of sampling points (measurement points) of the model f(x), based on the model f(x) input from the learning unit 140, an estimated value y = f(xt) input from the regression estimation unit 170, and learning data xt. The sampling points are the points represented by the respective pieces of the learning data $(x_1, y_1)$, $(x_2, y_2)$,..., and $(x_N, y_N)$. Note that an example of the processing to be performed by the gradient value calculation unit 161 will be described later using Expressions (2) to (4) and the like.

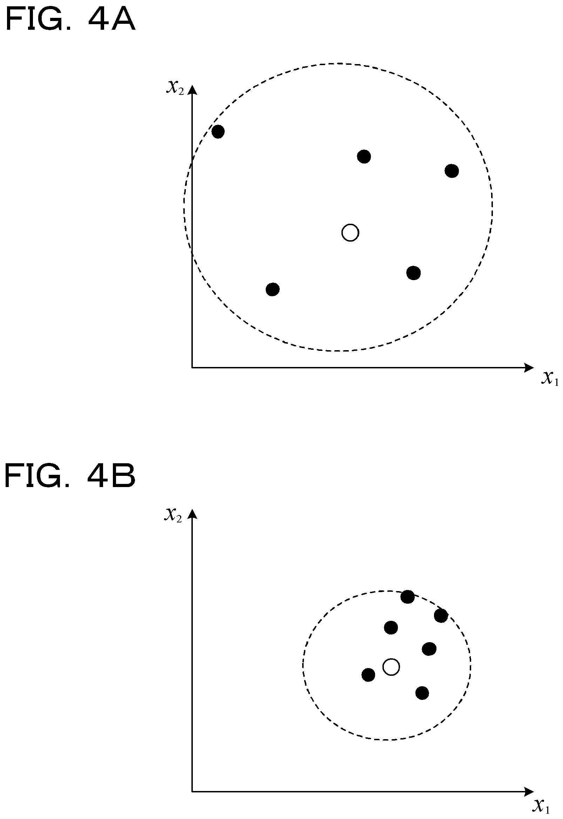

The peripheral gradient value acquisition unit 162 acquires, from the gradient value calculation unit 161, the gradient values $\partial f(x)/\partial x$ calculated for all the plurality of sampling points by the gradient value calculation unit 161, and acquires the gradient values $\partial f(x)/\partial x$ of the sampling points within the predetermined range around the respective sampling points. Note that an example of such processing will be described later using FIGs. 4A and 4B, Expression (6), and the like.

The impact calculation unit 163 calculates an impact St with respect to each of the plurality of sampling points, based on the gradient values $\partial f(x)/\partial x$ calculated by the gradient value calculation unit 161 and the gradient values $\partial f(x)/\partial x$ of the sampling points within the predetermined peripheral ranges acquired with respect to the respective sampling points by the peripheral gradient value acquisition unit 162. The impact calculation unit 163 calculates the impact St with respect to each sampling point, and outputs the impact St to the prediction unit 180. Note that an example of such processing will be described later using Expressions (7) and (8), and the like.

The regression estimation unit 170 generates an estimated value y = f(xt) based on the learning data xt input from the data cleansing unit 110 and the model f(x) input from the learning unit 140, and outputs the estimated value y = f(xt) and the learning data xt to the gradient value calculation unit 161 and the prediction unit 180.

The prediction unit 180 estimates (predicts) the cause of an error in a case where the impact St is set as the impact of the explanatory variable for the objective variable, based on the impact St at each sampling point input from the impact calculation unit 163, and the estimated value y = f(xt) and the learning data xt input from the regression estimation unit 170. The prediction unit 180 may also predict the state (a state such as movement) of a moving object such as an EV or a ship, and may further predict the life of each of the components and the like of the moving object, using the estimated cause.

In an example, the analysis server 100 generates a nonlinear regression model for estimating objective variables representing the movement or the like of the respective components from the data representing measured values or the like indicating the movement or the like of the respective components of a moving object such as an EV or a ship, and calculates the impacts for estimating the explanatory variables that affect the objective variables, with respect to the respective sampling points. The kernel regression model generation unit 142A1 generates the nonlinear regression model. The impact analysis unit 160 calculates the impacts. In the description below, a gradient value calculation method, a method for acquiring the gradients at the sampling points within predetermined peripheral ranges, an impact calculation method, the effects in a case where impacts are used, and the like will be explained in order.

<Gradient Value Calculation Method>

The K-nearest neighbor crossover kernel regression model (a Gaussian kernel regression model) to be generated by the kernel regression model generation unit 142A1 can be expressed by the following Expression (1). The K-nearest neighbor crossover kernel regression model expressed by Expression (1) is input as the model f(x) to the gradient value calculation unit 161.
[Expression. 1]

$$k_{\mathrm{REX}}(x, x_i) = E_{X_m}[N(x|x_i, \sigma\Sigma_i)] = \frac{1}{M}\sum_{x\in X_m} N(x|x_i, \sigma\Sigma_i) \qquad (1)$$

The gradient value calculation unit 161 calculates the gradient value $\partial f(x)/\partial x$ with respect to each of the plurality of sampling points of the K-nearest neighbor crossover kernel regression model, according to the following Expression (2). Note that Exm represents the calculation of the average value, and N(x|xi, $\sigma\Sigma$i) represents the normal distribution of xi. Here, $\sigma\Sigma$i represents the variance of the distribution of xi. Further, m represents the data number of xi included in a data set Xm, and M represents the data number of xi included in the data set Xm.
[Expression. 2]

$$\frac{\partial f(x)}{\partial x_j} = \frac{1}{\sigma M}\sum_{i=0}^{N} \alpha_i(x) \sum_{x\in X_m} N(x|x_i, \sigma\Sigma_i)\left(\frac{1}{M}\beta(x) - \Sigma_i^{-1}(x - x_i)\right)_j \qquad (2)$$

However, ai(x) and β(x) are expressed by the following Expressions (3) and (4).
[Expression. 3]

$$\alpha_i(x) = \frac{y_i}{\sum_{i=0}^{N}\sum_{x\in X_m} N(x|x_i, \sigma\Sigma_i)} \qquad (3)$$

[Expression. 4]

$$\beta(x) = \frac{\sum_{i=0}^{N}\sum_{x\in X_m} N(x|x_i, \sigma\Sigma_i)\Sigma_i^{-1}(x-x_i)}{\sum_{i=0}^{N}\sum_{x\in X_m} N(x|x_i, \sigma\Sigma_i)} \qquad (4)$$

<Method for Acquiring the Gradients at the Sampling Points Within Predetermined Peripheral Ranges>

In a case where the gradient value calculation unit 161 calculates the gradient value $\partial f(x)/\partial x$ with respect to each of the plurality of sampling points of the K-nearest neighbor crossover kernel regression model, the peripheral gradient value acquisition unit 162 acquires one or more gradient values $\partial f(x)/\partial x$ calculated by the gradient value calculation unit 161 with respect to one or more sampling points located within the range of the K-nearest neighbor distance from the sampling point. Since it is considered that there is a plurality of sampling points within the range of the K-nearest neighbor distance from the sampling point, a plurality of gradient values $\partial f(x)/\partial x$ is acquired here.
Here, it is assumed that the gradient value $\partial f(xh)/\partial xh$ to be calculated by the gradient value calculation unit 161 is expressed by the following Expression (5).
[Expression. 5]

$$\frac{\partial f(\pmb{x_h})}{\partial \pmb{x_h}} = \left(\frac{\partial f(\pmb{x_h})}{\partial x_1}, \frac{\partial f(\pmb{x_h})}{\partial x_2}, \cdots, \frac{\partial f(\pmb{x_h})}{\partial x_D}\right)^T \qquad (5)$$

In such a case, the peripheral gradient value acquisition unit 162 acquires a plurality of gradient values expressed by the following Expression (6) with respect to the plurality of sampling points located within the range of the K-nearest neighbor distance (h-km to h+km).
[Expression. 6]

$$\left\{\frac{\partial f\left(\pmb{x_{h-k_m}}\right)}{\partial \pmb{x_{h-k_m}}}, \cdots, \frac{\partial f\left(\pmb{x_h}\right)}{\partial \pmb{x_h}}, \cdots, \frac{\partial f\left(\pmb{x_{h+k_m}}\right)}{\partial \pmb{x_{h+k_m}}}\right\} \qquad (6)$$

Alternatively, the peripheral gradient value acquisition unit 162 may acquire the gradient values $\partial f(x)/\partial x$ of the sampling points within the predetermined peripheral range by the method illustrated in FIGs. 4A and 4B. Such a method may be implemented in a case where the gradient value calculation unit 161 calculates the gradient value $\partial f(x)/\partial x$ with respect to each of the plurality of sampling points of a nonlinear regression model that is not the K-nearest neighbor crossover kernel regression model. However, the method may also be implemented in a case where the gradient value $\partial f(x)/\partial x$ is calculated with respect to each of the plurality of sampling points of the K-nearest neighbor crossover kernel regression model.
FIGs. 4A and 4B are graphs illustrating a method for acquiring the gradients of the sampling points within a predetermined peripheral range. In FIGs. 4A and 4B, where the abscissa axis is x1, and the ordinate axis is x2, a certain sampling point is indicated by a white circle (○), and peripheral sampling points are indicated by black circles (●).
Here, the range that includes a predetermined number of sampling points around the sampling point is defined as a predetermined range. As an example, the acquisition method in a case where the predetermined number is five is now described. As illustrated in FIG. 4A, in a case where the density of sampling points around the sampling point indicated by the white circle is relatively low, the predetermined range is relatively wide. As illustrated in FIG. 4B, in a case where the density of sampling points around the sampling point indicated by the white circle is relatively high, the predetermined range is relatively narrow. The predetermined range is the range of a circle around the sampling point indicated by the white circle. The number of the peripheral sampling points is five in FIG. 4A, and is six in FIG. 4B. As illustrated in FIG. 4B, the number of the peripheral sampling points is greater than five in some cases.

<Impact Calculation Method>

In a case where the impact calculation unit 163 has acquired the gradient value (see Expression (5)) with respect to each sampling point, and the gradient values with respect to the plurality of sampling points within the range of the K-nearest neighbor distance (see Expression (6)), the impact calculation unit 163 calculates an impact Sj according to the following Expression (7). The impact Sj is calculated as the root-mean-square of the gradient value (see Expression (5)) and the gradient values (see Expression (6)) with respect to the plurality of sampling points located within the range of the K-nearest neighbor distance.
[Expression. 7]

$$s_j = \sqrt{\frac{1}{2k_m + 1} \sum_{H=h-k_m}^{h+k_m} \left(\frac{\partial f(\pmb{x_H})}{\partial x_{H,j}}\right)^2} \qquad (7)$$

Alternatively, in a case where the peripheral gradient value acquisition unit 162 has acquired the gradient values of the sampling points within the predetermined peripheral ranges by the method illustrated in FIGs. 4A and 4B, the impact calculation unit 163 calculates, as the impact Sj, the root-mean-square of the gradient value of each sampling point (such as the white circle in FIGs. 4A and 4B) and the gradient values $\partial f(x)/\partial x$ of the sampling points (such as the black circle in FIGs. 4A and 4B) within the predetermined range around each sampling point, according to the following Expression (8).
[Expression. 8]

$$S_j = \sqrt{\frac{1}{2k_m+1}\sum_{H\in X_{tk}}\left(\frac{\partial f(x_h)}{\partial x_{h,j}}\right)^2} \qquad (8)$$

<Effects in a Case Where Impacts Are Used>

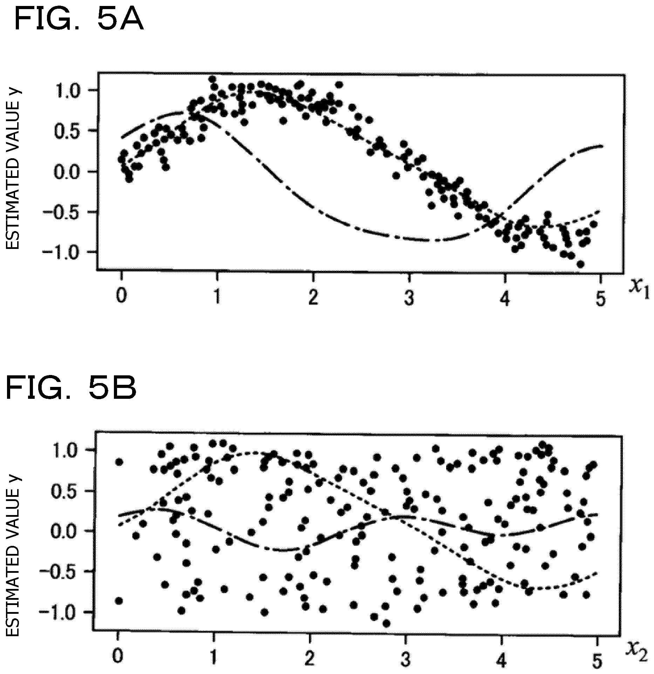

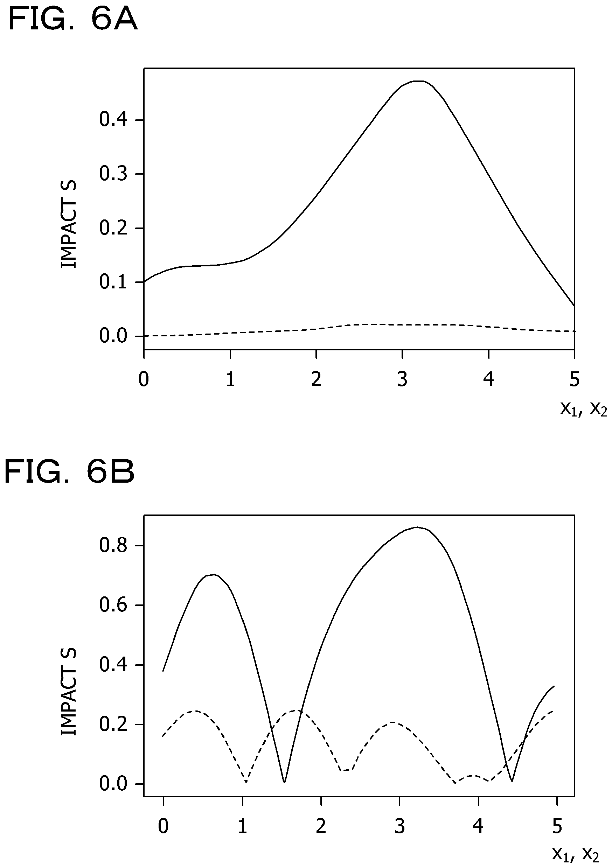

Referring now to FIGs. 5A, 5B, 6A, and 6B, the effects of impacts are described. FIGs. 5A and 5B are graphs illustrating an example of distributions of data x1 and data x2. The points illustrated in FIG. 5A indicate the data x1. Further, the estimated value y in FIG. 5A is indicated by a dashed line, and the gradient value $\partial y/\partial x1$ of the estimated value y in all the data x1 is indicated by a dot-and-dash line. The gradient value $\partial y/\partial x1$ of the estimated value y in all the data x1 is the derivative value of the entire function representing the estimated value y.

Meanwhile, the points illustrated in FIG. 5B indicate the data x2. Further, the estimated value y in FIG. 5B is indicated by a dashed line, and the gradient value $\partial y/\partial x2$ of the estimated value y in all the data x2 is indicated by a dot-and-dash line. The gradient value $\partial y/\partial x2$ of the estimated value y in all the data x2 is the derivative value of the entire function representing the estimated value y. The estimated value y is the same as the estimated value y illustrated in FIG. 5A.

Here, the estimated value y is expressed by the following Expression (9), and the impact with respect to the estimated value y is calculated.

[Expression. 9]

$$y = w_1 sin(x_1) + w_2 sin(x_2) + a \qquad (9)$$

In Expression (9), a weight w1 is 0.95, and a weight w2 is 0.05, to make the impact of x1 greater than that of x2. Further, "a" has an average value of 0 and a variance of 0.2.

FIGs. 6A and 6B are graphs illustrating the impacts calculated with respect to the data x1 and the data x2. FIG. 6A illustrates the impacts S calculated from the gradient values $\partial f(x)/\partial x$ with respect to the respective sampling points of the K-nearest neighbor crossover kernel regression model (Gaussian kernel regression model), and the plurality of gradient values $\partial f(x)/\partial x$ with respect to the plurality of sampling points within the ranges of the K-nearest neighbor distance from the sampling points. In FIG. 6A, the abscissa axis indicates the data x1 and x2, and the ordinate axis indicates the impacts S. The K-nearest neighbor distance is 30. In FIGs. 6A and 6B, the solid line indicates the impact of the data x1, and the dashed line indicates the impact of the data x2.

Meanwhile, for comparison, FIG. 6B illustrates the impacts calculated with the use of the derivative value of the entire function representing the estimated value y. In FIG. 6B, the abscissa axis indicates the data x1 and x2, and the ordinate axis indicates the impacts S. In FIG. 6B, the solid line indicates the impact of the data x1, and the dashed line indicates the impact of the data x2.

As can be seen from FIG. 6A, the impact S of the data x1 is greater than the impact S of the data x2, and the calculation was performed appropriately. On the other hand, as can be seen from FIG. 6B, the impact of the data x1 is smaller than the impact of the data x2, and the calculation was not performed appropriately.

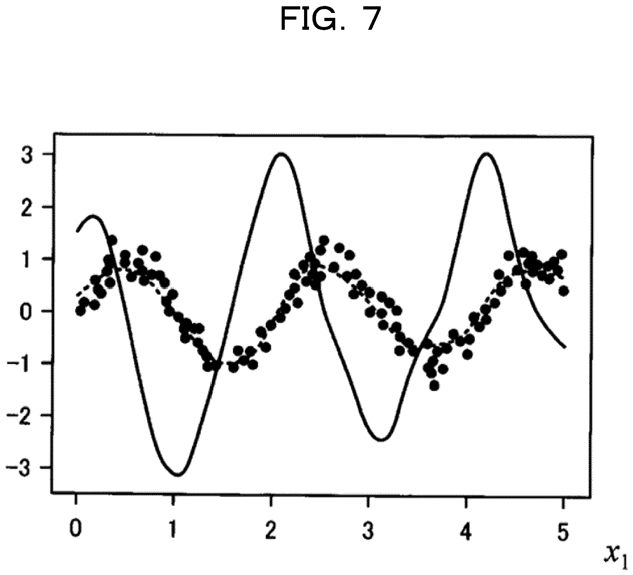

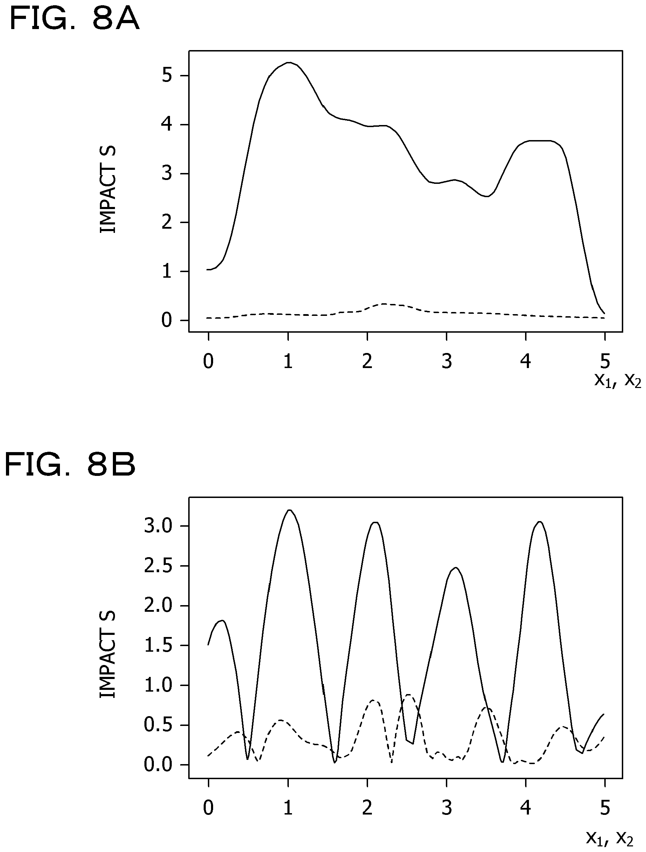

Next, the effects of impacts are described, with reference to FIGs. 7, 8A, and 8B. FIG. 7 is a graph illustrating an example of the distribution of the data x1. The points illustrated in FIG. 7 indicate the data x1. Further, the estimated value y in FIG. 7 is indicated by a dashed line, and the gradient value $\partial y/\partial x1$ of the estimated value y in all the data x1 is indicated by a solid line. The gradient value $\partial y/\partial x1$ of the estimated value y in all the data x1 is the derivative value of the entire function representing the estimated value y. Note that, although not indicated in this graph, a distribution is also obtained with respect to the data x2.

Here, the estimated value y is expressed by the following Expression (10). The estimated value y expressed by Expression (10) is a highfrequency function with a relatively high frequency. In the description below, the impact with respect to the estimated value y is calculated.

[Expression. 10]

$$y = w_1 sin(3x_1) + w_2 sin(3x_2) + a \qquad (10)$$

In Expression (10), the weight w1 is 0.95, and the weight w2 is 0.05, to make the impact of x1 greater than that of x2. Further, "a" has an average value of 0 and a variance of 0.1.

FIGs. 8A and 8B are graphs illustrating the impacts calculated with respect to the data x1 and the data x2. FIG.

8A illustrates the impacts S calculated from the gradient values ∂f(x)/∂x with respect to the respective sampling points of the K-nearest neighbor crossover kernel regression model (Gaussian kernel regression model), and the plurality of gradient values ∂f(x)/∂x with respect to the plurality of sampling points within the ranges of the K-nearest neighbor distance from the sampling points. In FIG. 8A, the abscissa axis indicates the data x1 and x2, and the ordinate axis indicates the impacts S. The K-nearest neighbor distance is 30. In FIGs. 8A and 8B, the solid line indicates the impact of the data x1, and the dashed line indicates the impact of the data x2.

Meanwhile, for comparison, FIG. 8B illustrates the impacts calculated with the use of the derivative value of the entire function representing the estimated value y. In FIG. 8B, the abscissa axis indicates the data x1 and x2, and the ordinate axis indicates the impacts S. In FIG. 8B, the solid line indicates the impact of the data x1, and the dashed line indicates the impact of the data x2.

As can be seen from FIG. 8A, the impact S of the data x1 is greater than the impact S of the data x2, and the calculation was performed appropriately. On the other hand, as can be seen from FIG. 8B, the impact of the data x1 is smaller than the impact of the data x2 at five points, and the calculation was not performed appropriately. For example, in a case where a nonlinear regression model with intense fluctuation is created, the gradient fluctuates greatly, and therefore, the impact also fluctuates greatly. By the method according to the impact calculation program of the embodiment, the fluctuation of the impacts S can be reduced, and the impacts of the data x1 and x2 are not reversed.

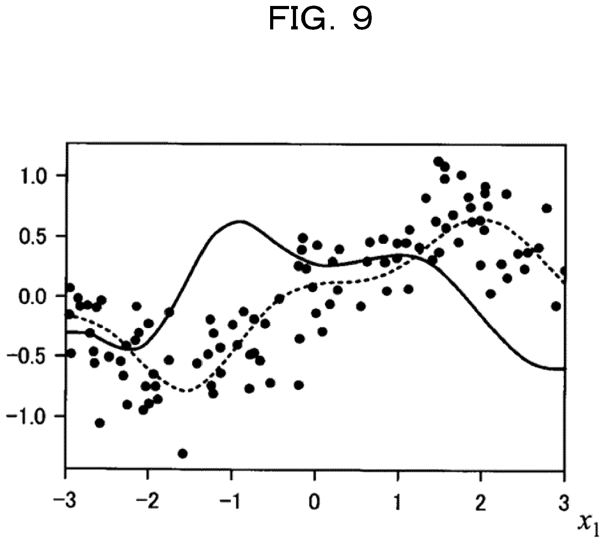

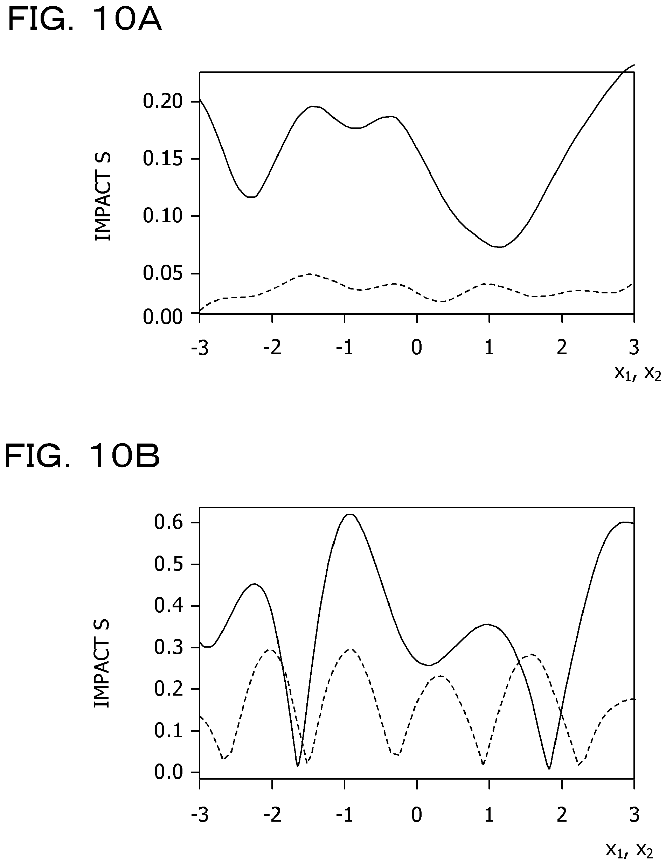

Next, the effects of impacts are described, with reference to FIGs. 9, 10A, and 10B. FIG. 9 is a graph illustrating an example of the distribution of the data x1. The points illustrated in FIG. 9 indicate the data x1. Further, the estimated value y in FIG. 9 is indicated by a dashed line, and the gradient value ∂y/∂x1 of the estimated value y in all the data x1 is indicated by a solid line. The gradient value ∂y/∂x1 of the estimated value y in all the data x1 is the derivative value of the entire function representing the estimated value y. Note that, although not indicated in this graph, a distribution is also obtained with respect to the data x2.

Here, the estimated value y is expressed by the following Expression (11). The estimated value y expressed by Expression (11) is a function that is relatively highly affected by the noise in the data x1 and x2. In the description below, the impact with respect to the estimated value y is calculated.

[Expression. 11]

$$y = w_1 sin(x_1) + w_2 sin(5x_2) + a \qquad (11)$$

In Expression (11), the weight w1 is 0.7, and the weight w2 is 0.3, to make the impact of x1 greater than that of x2. Further, "a" has an average value of 0 and a variance of 0.1.

FIGs. 10A and 10B are graphs illustrating the impacts calculated with respect to the data x1 and the data x2. FIG. 10A illustrates the impacts S calculated from the gradient values ∂f(x)/∂x with respect to the respective sampling points of the K-nearest neighbor crossover kernel regression model (Gaussian kernel regression model), and the plurality of gradient values ∂f(x)/∂x with respect to the plurality of sampling points within the ranges of the K-nearest neighbor distance from the sampling points. In FIG. 10A, the abscissa axis indicates the data x1 and x2, and the ordinate axis indicates the impacts S. The K-nearest neighbor distance is 100. In FIGs. 10A and 10B, the solid line indicates the impact of the data x1, and the dashed line indicates the impact of the data x2.

Meanwhile, for comparison, FIG. 10B illustrates the impacts calculated with the use of the derivative value of the entire function representing the estimated value y. In FIG. 10B, the abscissa axis indicates the data x1 and x2, and the ordinate axis indicates the impacts S. In FIG. 10B, the solid line indicates the impact of the data x1, and the dashed line indicates the impact of the data x2.

As can be seen from FIG. 10A, the impact S of the data x1 is greater than the impact S of the data x2, and the calculation was performed appropriately. On the other hand, as can be seen from FIG. 10B, the impact of the data x1 is smaller than the impact of the data x2 at two points, and the calculation was not performed appropriately. For example, in a case where a nonlinear regression model that is greatly affected by noise is created, the gradient fluctuates greatly, and therefore, the impact also fluctuates greatly. By the method according to the impact calculation program of the embodiment, the fluctuation of the impacts S can be reduced, and the impacts of the data x1 and x2 are not reversed.

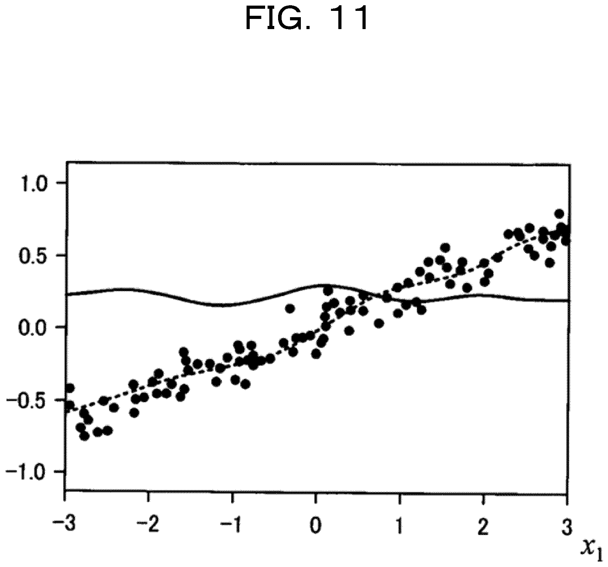

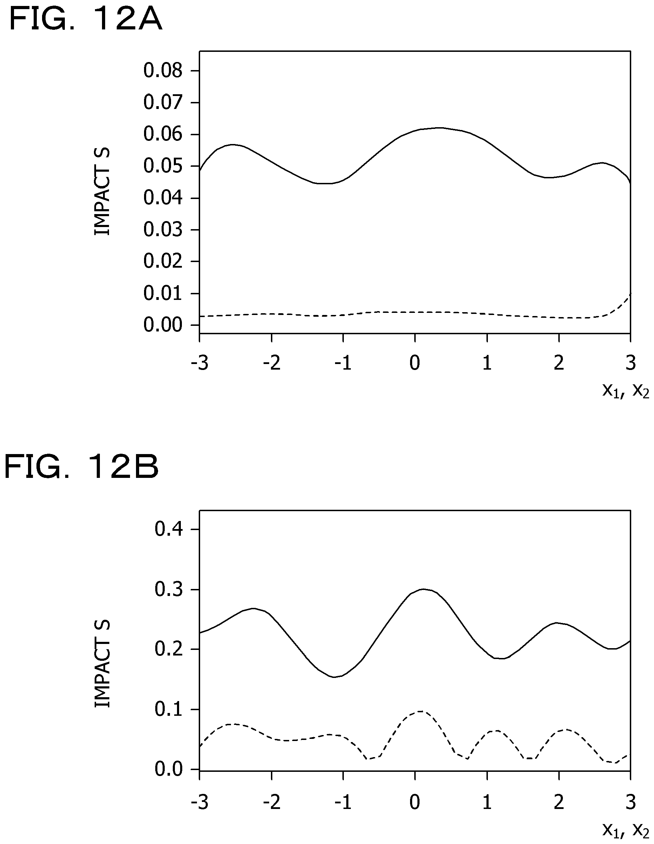

Next, the effects of impacts are described, with reference to FIGs. 11, 12A, and 12B. FIG. 11 is a graph illustrating an example of the distribution of the data x1. The points illustrated in FIG. 11 indicate the data x1. Further, the estimated value y in FIG. 11 is indicated by a dashed line, and the gradient value ∂y/∂x1 of the estimated value y in all the data x1 is indicated by a solid line. The gradient value ∂y/∂x1 of the estimated value y in all the data x1 is the derivative value of the entire function representing the estimated value y. Note that, although not indicated in this graph, a distribution is also obtained with respect to the data x2.

Here, the estimated value y is expressed by the following Expression (12). The estimated value y expressed by Expression (12) is a function that is less affected by the noise in the data x1 and x2. In the description below, the impact with respect to the estimated value y is calculated.

[Expression. 12]

$$y = w_1 sin(0.2x_1) + w_2 sin(0.2x_2) + a \qquad (12)$$

In Expression (12), the weight w1 is 0.95, and the weight w2 is 0.05, to make the impact of x1 greater than that of x2. Further, "a" has an average value of 0 and a variance of 0.1.

FIGs. 12A and 12B are graphs illustrating the impacts calculated with respect to the data x1 and the data x2. FIG. 12A illustrates the impacts S calculated from the gradient values $\partial f(x)/\partial x$ with respect to the respective sampling points of the K-nearest neighbor crossover kernel regression model (Gaussian kernel regression model), and the plurality of gradient values $\partial f(x)/\partial x$ with respect to the plurality of sampling points within the ranges of the K-nearest neighbor distance from the sampling points. In FIG. 12A, the abscissa axis indicates the data x1 and x2, and the ordinate axis indicates the impacts S. The K-nearest neighbor distance is 100. In FIGs. 12A and 12B, the solid line indicates the impact of the data x1, and the dashed line indicates the impact of the data x2.

Meanwhile, for comparison, FIG. 12B illustrates the impacts calculated with the use of the derivative value of the entire function representing the estimated value y. In FIG. 12B, the abscissa axis indicates the data x1 and x2, and the ordinate axis indicates the impacts S. In FIG. 12B, the solid line indicates the impact of the data x1, and the dashed line indicates the impact of the data x2.

As can be seen from FIG. 12A, the impact S of the data x1 is greater than the impact S of the data x2, and the calculation was performed appropriately. As can be seen from FIG. 12B, the impact S of the data x1 is also greater than the impact S of the data x2, and the calculation was performed appropriately. However, in the graph in FIG. 12A, which was calculated according to the impact calculation program of the embodiment, the impact S of the data x1 is greater than the impact S of the data x2 more evenly over the entire graph. Therefore, in a case where a nonlinear regression model with less fluctuation is created, for example, the gradient does not fluctuate greatly, and the impacts do not fluctuate greatly either. However, even in such a nonlinear regression model, the fluctuation of the impacts S can be reduced, and such appropriate impacts S that do not cause a reversal between the impacts of the data x1 and the data x2 can be calculated, by the method according to the impact calculation program of the embodiment.

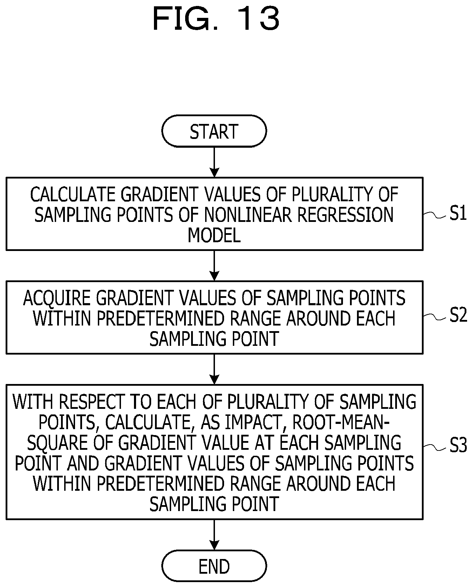

FIG. 13 is a flowchart illustrating a process to be executed by the analysis server 100. As a prerequisite for the process, the kernel regression model generation unit 142A1 has generated a K-nearest neighbor crossover kernel regression model.

When the process starts, the gradient value calculation unit 161 calculates gradient values with respect to the plurality of sampling points of the nonlinear regression model (step S1).

Next, the peripheral gradient value acquisition unit 162 acquires the gradient values of the sampling points within the predetermined ranges around the respective sampling points (step S2).

Next, with respect to each of the plurality of sampling points, the impact calculation unit 163 calculates, as an impact, the root-mean-square of the gradient value at each sampling point and the gradient values of the sampling points within the predetermined range around each sampling point (step S3). The series of processes then comes to an end.

As described above, according to the embodiment, an impact S is calculated as the root-mean-square of a gradient value (see Expression (5)) and the gradient values (see Expression (6)) with respect to the plurality of sampling points located within the range of the K-nearest neighbor distance. Accordingly, an appropriate impact can be calculated in accordance with a nonlinear regression model.

Thus, it is possible to provide an impact calculation program, an impact calculation device, and an impact calculation method capable of appropriately calculating an impact.

Note that, in the embodiment described above, the kernel regression model generation unit 142A1 generates a kernel regression model. However, instead of the kernel regression model generation unit 142A1, a generation unit that generates a nonlinear regression model that is not a kernel regression model may be used.

Also, in the embodiment described above, a K-nearest neighbor crossover kernel regression model is used as a Gaussian kernel regression model for calculating gradient values. However, in a case where an e-bagging kernel regression model is used, the following Expressions (13) to (16) are used in place of Expressions (1) to (4).

The e-bagging kernel regression model is expressed by the following Expression (13).

[Expression. 13]

$$k_{REX}(x, x_i) = N\left(x \middle| x_i, E_{\Sigma_i}\left[\Sigma_i^{-1}\right]^{-1}\right) = N\left(x \middle| x_i, H_i^{-1}\right) \qquad (13)$$

A gradient value $\partial f(x)/\partial x$ is calculated according to the following Expression (14).

[Expression. 14]

$$\frac{\partial f(x)}{\partial x_j} = \frac{\partial f(x)}{\partial x}\frac{\partial x}{\partial x_j} = \frac{1}{\sigma}\sum_{i=0}^{N}\alpha_i(x)\left(\beta(x) - H_i^{-1}(x - x_i)\right)_j N\left(x|x_i, \sigma H_i\right) \quad (14)$$

However, ai(x) and β(x) are expressed by the following Expressions (15) and (16).
[Expression. 15]

$$\beta(x) = \frac{\sum_{i=0}^{N} N(x|x_i, \sigma H_i) H_i^{-1}(x - x_i)}{\sum_{i=0}^{N} N(x|x_i, \sigma H_i)} \quad (15)$$

[Expression. 16]

$$\alpha_i(x) = \frac{y_i}{\sum_{i=0}^{N} N(x|x_i, \sigma H_i)} \quad (16)$$

Further, the K-nearest neighbor crossover kernel regression model as the Gaussian kernel regression model can be expressed with the use of Expressions (17) to (20), instead of Expressions (1) to (4).
The K-nearest neighbor crossover kernel regression model as a Gaussian kernel regression model can be expressed by the following Expressions (17) and (18).
[Expression. 17]

$$f(x) = \frac{\sum_{i=0}^{N} k(x, x_i) y_i}{\sum_{i=0}^{N} k(x, x_i)} = \sum_{i=0}^{N} \alpha_i(x)k(x, x_i) \quad (17)$$

Here, oi in Expression (17) can be expressed by the following Expression (18).
[Expression. 18]

$$\alpha_i(x) = \frac{y_i}{\sum_{i=0}^{N} k(x, x_i)} \quad (18)$$

If the kernel function k(x, xi) in the Gaussian kernel regression model defined by Expressions (17) and (18) is a Gaussian kernel expressed by the following Expression (19), the gradient value is defined by Expression (20).
[Expression. 19]

$$N(x|x_i, \sigma \Sigma_i) \quad (19)$$

[Expression. 20]

$$\frac{\partial f(x)}{\partial x_j} = \frac{\partial f(x)}{\partial x}\frac{\partial x}{\partial x_j} = \frac{1}{\sigma}\sum_{i=0}^{N}\alpha_i(x)\left(\beta(x) - \Sigma_i^{-1}(x - x_i)\right)_j N(x|x_i, \sigma \Sigma_i) \quad (20)$$

Note that, β (x) is expressed as following.
[Expression. 21]

$$\beta(x) = \frac{\sum_{i=0}^{N} N(x|x_i, \sigma\Sigma_i)\,\Sigma_i^{-1}(x - x_i)}{\sum_{i=0}^{N} N(x|x_i, \sigma\Sigma_i)} \qquad (21)$$

Although an impact calculation program, an impact calculation device, and an impact calculation method according to an exemplary embodiment have been described above, embodiments are not limited to the one disclosed in detail, and various changes and alterations can be made thereto without departing from the scope of the claims.

**Claims**

1. An impact calculation program executed by the computer, the impact calculation program comprising:

   calculating a plurality of gradient values, each of the plurality of gradient values is a gradient value corresponding to each of a plurality of sampling points of a nonlinear regression model; and
   calculating, as an impact, a root-mean-square of which a first gradient value included in the plurality of the gradient values at a first sampling point included in the plurality of sampling point and a second gradient value at a one or more sampling point within a predetermined range around the first sampling point.

2. The impact calculation program according to claim 1, further comprising:
   acquiring the second gradient value.

3. The impact calculation program according claim 1, further comprising:
   generating the nonlinear regression model based on learning data.

4. The impact calculation program according claim 1, wherein the predetermined range is a range including a predetermined number of sampling points around the first sampling point.

5. The impact calculation program according claim 1, wherein
   the nonlinear regression model is a K-nearest neighbor crossover kernel regression model, and
   the predetermined range is a range represented by a K-nearest neighbor distance from the first sampling point.

6. The impact calculation program according claim 1, further comprising estimating a cause of an error based on the impact.

7. The impact calculation program according claim 6, further comprising:
   generating the nonlinear regression model based on learning data.

8. The impact calculation program according claim 1, further comprising:

   generating an estimated value based on a learning data and the nonlinear regression model; and
   estimating a cause of an error based on the impact and estimated value.

9. An impact calculation devise comprising:

   a gradient value calculation unit configured to calculate a plurality of gradient values, each of the plurality of gradient values is a gradient value corresponding to each of a plurality of sampling points of a nonlinear regression model; and
   an impact calculation unit configured to calculate, as an impact, a root-mean-square of which a first gradient value included in the plurality of the gradient values at a first sampling point included in the plurality of sampling point and a second gradient value at a one or more sampling point within a predetermined range around the first sampling point.

10. The impact calculation devise according claim 9, wherein the predetermined range is a range including a predetermined number of sampling points around the first sampling point.

11. The impact calculation devise according claim 9, wherein

the nonlinear regression model is a K-nearest neighbor crossover kernel regression model, and
the predetermined range is a range represented by a K-nearest neighbor distance from the first sampling point.

12. The impact calculation devise according claim 9, further comprising:
    a prediction unit configured to estimate a cause of an error based on the impact.

13. The impact calculation devise according claim 9, further comprising:

    a regression estimation unit configured to generate an estimated value based on a learning data and the nonlinear regression model; and
    a prediction unit configured to estimate a cause of an error based on the impact and estimated value.

14. The impact calculation devise according claim 13, further comprising:
    a regression modeling unit configured to generate the nonlinear regression model based on the learning data.

15. An impact calculation method comprising:

    calculating a plurality of gradient values, each of the plurality of gradient values is a gradient value corresponding to each of a plurality of sampling points of a nonlinear regression model; and
    calculating, as an impact, a root-mean-square of which a first gradient value included in the plurality of the gradient values at a first sampling point included in the plurality of sampling point and a second gradient value at a one or more sampling point within a predetermined range around the first sampling point.

# FIG. 1

# FIG. 2

# FIG. 3

FIG. 4A

FIG. 4B

## FIG. 5A

## FIG. 5B

FIG. 6A

FIG. 6B

# FIG. 7

FIG. 8A

FIG. 8B

FIG. 9

FIG. 10A

FIG. 10B

# FIG. 11

FIG. 12A

FIG. 12B

# FIG. 13

```
                    ┌─────────────┐
                    │    START    │
                    └──────┬──────┘
                           │
                           ▼
    ┌────────────────────────────────────────────┐
    │  CALCULATE GRADIENT VALUES OF PLURALITY OF  │
    │  SAMPLING POINTS OF NONLINEAR REGRESSION    │── S1
    │                  MODEL                      │
    └───────────────────────┬────────────────────┘
                            │
                            ▼
    ┌────────────────────────────────────────────┐
    │  ACQUIRE GRADIENT VALUES OF SAMPLING POINTS │
    │  WITHIN PREDETERMINED RANGE AROUND EACH     │── S2
    │              SAMPLING POINT                 │
    └───────────────────────┬────────────────────┘
                            │
                            ▼
    ┌────────────────────────────────────────────┐
    │  WITH RESPECT TO EACH OF PLURALITY OF       │
    │  SAMPLING POINTS, CALCULATE, AS IMPACT,     │
    │  ROOT-MEAN-SQUARE OF GRADIENT VALUE AT      │── S3
    │  EACH SAMPLING POINT AND GRADIENT VALUES    │
    │  OF SAMPLING POINTS WITHIN PREDETERMINED    │
    │  RANGE AROUND EACH SAMPLING POINT           │
    └───────────────────────┬────────────────────┘
                            │
                            ▼
                    ┌─────────────┐
                    │     END     │
                    └─────────────┘
```

**EP 3 910 564 A1**

Europäisches
Patentamt

European
Patent Office

Office européen
des brevets

# EUROPEAN SEARCH REPORT

Application Number

EP 21 16 4861

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/143445 A2 (MICROSOFT TECHNOLOGY LICENSING LLC [US]) 25 July 2019 (2019-07-25) * figure 8 * * page 1, line 27 - page 1, line 29 * * page 2, line 12 - page 2, line 14 * * page 4, line 26 - page 5, line 7 * * page 8, line 2 - page 8, line 4 * * page 9, line 28 - page 11, line 5 * * page 13, line 11 - page 13, line 24 * * page 14, line 4 - page 14, line 5 * * page 14, line 29 - page 14, line 31 * * page 15, line 3 - page 15, line 4 * * page 16, line 1 - page 16, line 5 * * page 16, line 25 - page 17, line 13 * ----- | 1-15 | INV. G06N20/10 |
| X | WO 2015/099964 A1 (EXXONMOBIL RES & ENG CO [US]) 2 July 2015 (2015-07-02) * figures 1-13 * * paragraph [0006] - paragraph [0009] * ----- | 1-15 | |

TECHNICAL FIELDS SEARCHED (IPC)

G06N

The present search report has been drawn up for all claims

| Place of search | Date of completion of the search | Examiner |
|---|---|---|
| The Hague | 17 August 2021 | De Meyer, Arnaud |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

26

## ANNEX TO THE EUROPEAN SEARCH REPORT
## ON EUROPEAN PATENT APPLICATION NO.

EP 21 16 4861

This annex lists the patent family members relating to the patent documents cited in the above-mentioned European search report.
The members are as contained in the European Patent Office EDP file on
The European Patent Office is in no way liable for these particulars which are merely given for the purpose of information.

17-08-2021

| Patent document cited in search report | | Publication date | Patent family member(s) | | Publication date |
|---|---|---|---|---|---|
| WO 2019143445 | A2 | 25-07-2019 | EP 3740822 | A2 | 25-11-2020 |
| | | | US 2020186382 | A1 | 11-06-2020 |
| | | | US 2021127152 | A1 | 29-04-2021 |
| | | | WO 2019143445 | A2 | 25-07-2019 |
| WO 2015099964 | A1 | 02-07-2015 | CA 2931624 | A1 | 02-07-2015 |
| | | | EP 3087445 | A1 | 02-11-2016 |
| | | | SG 10201804054Y | A | 30-07-2018 |
| | | | US 2015219530 | A1 | 06-08-2015 |
| | | | WO 2015099964 | A1 | 02-07-2015 |

EPO FORM P0459

For more details about this annex : see Official Journal of the European Patent Office, No. 12/82

**EP 3 910 564 A1**

**Patent documents cited in the description**

- WO 2018025361 A